# EUROPÄISCHE PATENTSCHRIFT

(11) **EP 3 427 588 B1**
(45) Veröffentlichungstag und Bekanntmachung des Hinweises auf die Patenterteilung: **24.02.2021**
(21) Anmeldenummer: 18175667.7
(22) Anmeldetag: 04.06.2018
(51) Int. Cl.: A21B 3/13

(54) **SPRINGFORM**
SPRING FORM
MOULE À MANQUÉ

(30) Priorität: 13.07.2017 DE 102017115747
(43) Veröffentlichungstag der Anmeldung: 16.01.2019
(73) Patentinhaber: Warimex Waren-Import Export Handels-GmbH, 77743 Neuried (DE)
(72) Erfinder: Schmiederer, Michael, 77743 Neuried (DE)
(74) Vertreter: Patentanwälte Vomberg & Schart

(56) Entgegenhaltungen:
- WO-A1-2006/081988
- DE-A1- 2 449 505
- DE-C- 440 797
- FR-A1- 2 358 861
- GB-A- 196 811
- Yücel trading GMBH: "Ballarini pfanne backpfanne", , 1 January 2017 (2017-01-01), Retrieved from the Internet: URL:https://www.postenland.de/hochwertige- ballarini-backpfanne-kochgeschirr-a-cm-22- made-in-italy/a-6291/ [retrieved on 2020-02-20]
- Bergfreunde.de: "Tatonka Pan MultiSet Pfanne", Internet , 1 January 2016 (2016-01-01), Retrieved from the Internet: URL:https://www.bergfreunde.de/tatonka-pan -multi-set-pfanne/?subid=dyde73a7jermoozq& wt_mc=de.affiliate.tracdelight.-.feed.&cpi d=1&pid=10002&wmid=cc&utm_source=tracdelig ht&utm_medium=cpo-variabel&utm_campaign=pr oduktfeed&_$ja=tsid:52336&cpkey=2Fa7jG_b_8 w-qSpnlp8elbebS9H3V3GuGkICJfsNdy0 [retrieved on 2020-02-20]

## Beschreibung

Die Erfindung betrifft eine Springform mit einem einen Spannverschluss aufweisenden Mantelring und mit einem Bodenteil, die über eine eine Nut aufweisende formschlüssige Verbindung lösbar aneinander befestigt sind.

Springformen zum Backen sind in einer Draufsicht betrachtet rund, eckig oder auch andersartig, zum Beispiel als Herzform ausgebildet. Der Mantelring bildet die Seitenwand einer Backform, in die ein auswechselbarer Boden eingespannt wird. Im Regelfall wird zum Backen von Kuchen oder Tortenböden ein flacher Boden verwendet, wohingegen für kranzförmige Kuchen ein Boden mit einem zentralen Kamin verwendet wird. Der fertig gebackene Kuchen wird dadurch aus der Form entfernt, dass der Spannhebel des äußeren Rings (Mantelrings) gelöst wird, wodurch der Mantelring und der Boden voneinander getrennt werden.

In der DE 87 04 729 U1 wird eine Springform mit einer kreisrunden Bodenplatte beschrieben, deren Oberseite mit einem Überzug aus kratz- und schnittfester sowie säurebeständiger Emaille versehen ist. Die Emailbeschichtung soll der Verbesserung der Gebrauchseigenschaften dienen, insbesondere soll die Kratz- und Schnittfestigkeit der Bodenplatte vergrößert werden.

In der DE 41 43 285 T2 wird eine Springform für Backwaren beschrieben, bei der der Formbogen aus Glas, einer Glaskeramik oder Keramik besteht.

In der EP 0 285 988 B1 wird eine Springform vorgeschlagen, bei der die biege- und verbindungssteife Bodenplatte aus einem Stahlblech mit einer Dicke von mindestens 0,5 mm besteht, die auf ihrer Oberseite und ihre Unterseite als Beschichtung einen Emailüberzug aus einer kratz- und schnittfesten sowie säurebeständigen Emaille aufweist, wobei der Bördelrand der Bodenplatte von einer zu deren Unterseite hin gerichteten Umbördelung in Gestalt einer etwa halben Bördelrolle gebildet ist. Zusätzlich kann ggf. eine Antihaftbeschichtung aus Silikon oder aus PTFE vorgesehen sein.

Die in der DE 10 2007 060 967 B4 beschriebene Springform besitzt einen Mantelring mit einer umlaufenden Dichtwulst, die beim Schließen des Spannverschlusses gegen eine Formboden-Kante gedrückt wird, so dass die Formbodenkante abdichtend anliegt und ein Auslaufen eines flüssigen Inhalts aus dem Springforminnenraum vermieden wird.

Die DE 10 2016 110 890 A1 beschreibt eine Springform zum Backen von Backwaren, wobei die Springform einen Springformboden und einen mit dem Springformboden verbindbaren ringförmigen Springformrand umfasst und wobei der Springformrand einen Verschluss umfasst, welcher mit einem ersten Randabschnitt des Springformrands und einem zweiten Randabschnitt des Springformrands verbunden ist, so dass der Springformrand zur Bildung einer geschlossenen Springform um den Springformboden spannbar ist, der durch ein Pizzablech gebildet werden soll. Sofern das Pizza-Blech aus einem flachen Rundkörper besteht, unterscheidet sich eine solche Springform nicht von bisher bekannten Backformen. In der in der DE 10 2016 910 890 A1 dargestellten Version kann das Pizzablech aus einem Pizza-Blechboden und einem mit diesen verbundenen umlaufenden Pizza-Blechrand bestehen. Der Blechboden soll entweder mit seiner Außenseite als Springformboden oder mit seiner Innenseite als Boden einer sich nach obenhin konisch erweiterten Topfform benutzt werden. Nachteiligerweise müssen sowohl die Bodenaußen- als auch die Bodeninnenseite des Pizzableches jeweils zur Aufnahme von einem Pizza- oder Backteig ausgebildet sein, was die Herstellkosten erheblich vergrößert.

Die GB 196 811 A beschreibt eine Backform, die aus einem ebenen Bodenteil mit einer aufgebogenen, umlaufenden schmalen Kante und einem Mantelring besteht, der über einen Spannverschluss lösbar an der umlaufenden Kante befestigt ist.

Die DE 440 797 C betrifft eine Springform für Backzwecke, bei der in den Ringmantel verschiedene Einsatzstücke beliebiger Form, jedoch gleichen Durchmessers eingesetzt werden. Die Formen können ebene oder profilierte, kreis- oder ringförmige oder andere Bodenausgestaltungen aufweisen.

Es ist Aufgabe der vorliegenden Erfindung, die Verwendungsmöglichkeit der eingangs genannten Springform zu erweitern.

Diese Aufgabe wird durch eine Springform nach Anspruch 1 gelöst. Das Bodenteil ist als mit einem Pfannenboden und einer umlaufenden Seitenwand ausgestatteten Pfanne ausgebildet, wobei der Springform-Mantelring lösbar an der Pfannenseitenwand befestigt ist, so dass die Springform wahlweise zum Backen oder zum Braten oder Rösten von Speisen verwendbar ist. Der Vorteil der erfindungsgemäßen Springform besteht darin, dass die Springform wie bisher als Backform genutzt werden kann, alternativ jedoch auch als Pfanne oder Bräter. Insbesondere kann die Pfanne als sogenannte Crêpe-Pfanne mit einem Mantel in geringer Höhe ausgebildet sein. Der Vorteil dieser Ausbildung besteht insbesondere darin, dass der Boden zweierlei Funktionen erfüllen kann, so dass sich die separate Anschaffung sowohl einer Springform für das Backen als auch einer Pfanne erübrigt. Bei einer ausreichenden Dichtigkeit der Springform, insbesondere im Nutbereich, kann diese auch zum Kochen (als Kochtopf) verwendet werden.

Um die Handhabung des Bodenteils beim Braten oder Garen zu erleichtern, verfügt das Bodenteil über einen abnehmbaren Griff verfügen. Eine mögliche Form für einen abnehmbaren Griff ist beispielsweise in den Unterlagen der DE 10 2015 118 086 A1 beschrieben.

Alternativ ist es selbstverständlich ebenso möglich, ein Griffansatzstück für einen abnehmbaren Griff an dem Mantelring lösbar zu befestigen, so dass bei aneinander fixierten Mantelring und Bodenteil die gesamte Springform angehoben oder verschoben werden kann. Diese Variation hilft sowohl beim Entnehmen der Springform aus dem Backofen als auch bei der Verwendung der Springform zum Braten, wenn die darin befindlichen Speisen gewendet werden müssen.

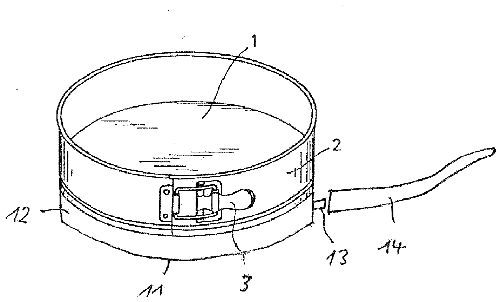

Die meisten Herde sind als Induktionsherde ausgestaltet, so dass das Bodenteil nach der Erfindung induktionsherdgeeignet ausgebildet ist, das heißt einen hinreichend hohen Anteil an ferromagnetischen Metallen aufweist. Weitere Details ergeben sich aus der Zeichnung, die eine Prinzipskizze der erfindungsgemäßen Springform zeigt.

Vorzugsweise besitzt die Pfanne eine Seitenwand, deren oberer Rand als elastische Dichtung ausgebildet ist, die beim miteinander verbundenen Mantelring der Springform und dem Bodenteil in die Nut des Mantelrings abdichtend eingreift.

Die erfindungsgemäße Springform besteht aus einem Bodenteil 1 und einem Mantelring 2, die mittels Betätigung des Spannverschlusses 3 aneinander fixierbar sind, wobei in einer Ausführungsform der Mantelring 2 eine innere umlaufende Nut aufweisen kann, in welche eine vorstehende Kante des Bodens 1 eingreift. Im Rahmen der vorliegenden Erfindung können auch andere als der dargestellte Spannverschluss verwendet werden. Das Bodenteil ist in Abwandlung der nach dem Stand der Technik bekannten Ausführungsformen als Pfanne mit einem ebenen Boden 11 und einer Seitenwand 12 ausgebildet, an dessen oberen freien Rand sich eine Bördelung befindet, welche in eine nicht dargestellte Nut des Mantelrings 2 eingreift. Der obere Rand der Seitenwand 12 kann als Dichtlippe ausgebildet sein. An dem Mantel 12 der Pfanne ist ein Ansatzstück 13 befestigt, worüber ein Handgriff 14 geschoben und fixiert werden kann. Bei der Fixierung wird auf die in der DE 10 2015 118 086 A1 in vielfältiger Weise beschriebene Ausbildungsmöglichkeit verwiesen. Die als Bodenteil ausgebildete Pfanne und der Mantelring können in einer Draufsicht betrachtet kreisförmig, oval, vieleckig oder im Wesentlichen rechteckig ausgebildet sein.

Das Bodenteil 1 kann auf der Innenseite mit einer Antihaftbeschichtung, zum Beispiel aus PTFE, überzogen sein.

Nach Lösen des Bodenteils 1 von dem Mantelring 2 kann die Pfanne als reines Gerät zum Braten oder Rösten von Speisen oder beispielsweise als Crêpe-Pfanne, die immerhin nur einen schmalen Mantelrand 12 aufweist, benutzt werden. Bei Speisen mit großen Volumen kann auch die aus der Pfanne beziehungsweise dem Bodenteil 1 und dem hieran befestigten Mantelring 2 fixierte Einheit als Pfanne genutzt werden, was insbesondere beim Wenden von lockeren Speisen Vorteile hat.

Zum Backen wird die in der Zeichnung dargestellte Einheit in üblicher Weise und wie bekannt als Backform verwendet, wobei gegenüber herkömmlichen Backformen der Vorteil besteht, dass mittels des Handgriffs 4 die Backform ohne zur Hilfenahme von Handschuhen oder Tüchern aus dem heißen Ofen entnehmbar ist. Zur Entnahme des gebackenen Kuchens wird der Spannverschluss 3 gelöst und der Mantelring 2 entnommen.

## Patentansprüche

1. Springform mit einem einen Spannverschluss (3) aufweisenden Mantelring (2) und mit einem ebenen Bodenteil (1), das eine umlaufende Seitenwand (12) aufweist, die über eine eine Nut aufweisende formschlüssige Verbindung lösbar an dem Mantelring (2) befestigt ist,
**dadurch gekennzeichnet, dass**
das Bodenteil (1) und die Seitenwand (12) als Pfanne ausgebildet sind, wobei das Bodenteil (1) durch einen hinreichend hohen Anteil an ferromagnetischen Metallen induktionsherdgeeignet ist und an der Seitenwand (12) und/oder an dem Mantelring (2) ein Ansatzstück (13) für einen abnehmbaren Griff befestigt ist, so dass die Springform wahlweise zum Backen oder zum Braten oder Rösten von Speisen verwendbar ist.

2. Springform nach Anspruch 1, **dadurch gekennzeichnet, dass** die Seitenwand (12) einen oberen Rand besitzt, der als elastische Dichtlippe ausgebildet ist, die bei miteinander verbundenem Mantelring (2) und dem Bodenteil (1) in die Nut des Mantelrings (2) abdichtend eingreift.

## Claims

1. Spring form with a casing ring (2) having a tension lock (3) and with a plane bottom part (1) which has a circumferential side wall (12) which casing ring (2) and bottom part (1) are releasably attached to one another via a form-fitting connection having a groove,
**characterized in that**
the bottom part (1) and the side wall (2) are designed as a pan wherein the bottom part is suitable for induction cookers due to a sufficient high proportion of ferromagnetic metals and that an attachment piece (13) for a removable handle is arranged on the side wall (12) and/or on the casing ring (2), so that the spring form can be used optionally for baking or frying or roasting of food.

2. Spring form according to claim 1, **characterized in that** the side wall (12) has an upper edge which is designed as an elastic sealing lip which engages in a sealing manner in the groove of the casing ring (2) when the casing ring (2) and the bottom part (1) are connected.

## Revendications

1. Moule à manqué comprenant une bague d'enveloppe (2) présentant une fermeture de serrage (3), ainsi qu'une partie de fond (1) plate qui présente une paroi latérale circonférentielle (12) laquelle est fixée de manière amovible sur la bague d'enveloppe (2) par l'intermédiaire d'une liaison à engagement positif ayant une rainure, **caractérisé par le fait que** la partie de fond (1) et la paroi latérale (12) sont conçues en tant que poêle, dans lequel la partie de fond (1) est adaptée aux cuisinières à induction en raison d'une proportion suffisamment élevée de métaux ferromagnétiques, et/ou une pièce rapportée (13) pour une poignée amovible est fixée sur la paroi latérale (12) et/ou sur la bague d'enveloppe (2) de sorte que le moule à manqué peut être utilisé au choix pour cuire au four ou pour rôtir ou pour faire griller des repas.

2. Moule à manqué selon la revendication 1, **caractérisé par le fait que** la paroi latérale (12) présente un bord supérieur qui est conçu en tant que lèvre d'étanchéité élastique qui, lorsque la bague d'enveloppe (2) et la partie de fond (1) sont reliées l'une à l'autre, s'engage à étanchéité dans la rainure de la bague d'enveloppe (2).
